Europäisches Patentamt

European Patent Office

Office européen des brevets

(19)

(11) Publication number: **0 039 580**
**A1**

# EUROPEAN PATENT APPLICATION

(12)

(21) Application number: **81301904.9**

(22) Date of filing: **30.04.81**

(51) Int. Cl.³: **B 60 Q 1/00,** B 60 L 1/00

(30) Priority: **02.05.80 GB 8014643**

(43) Date of publication of application: **11.11.81**
**Bulletin 81/45**

(84) Designated Contracting States: **AT DE FR IT SE**

(71) Applicant: **Rolls-Royce Motors Limited, Pyms Lane, Crewe Cheshire CW1 3PL (GB)**

(72) Inventor: **Taylor-Moore, Alan, 6 Hardy Close, Wistaston Crewe Cheshire, CW2 8DY (GB)**

(74) Representative: **Duncan, Angus Henry et al, Barker, Brettell & Duncan 138 Hagley Road, Edgbaston Birmingham, B16 9PW (GB)**

(54) **Electrical systems for vehicles.**

(57) In a motor vehicle, the various electrical current-consuming components, or at least the majority of them, are fed through a ring main (M) (not necessarily a closed loop) that passes around the vehicle in a path that takes it close to each of the components (I) thus fed. Contacts of a local relay (R) close to the component (I) control the current to the component, the winding of the relay being energised through a light-current lead (L) from a remote switching point (S), such as the dashboard. If the winding of the relay (R) is itself fed from the ring main it does not need to be fused.

ACTORUM AG

1

ELECTRICAL SYSTEMS FOR VEHICLES

This invention relates to electrical systems for vehicles, primarily for road vehicles and in particular, though by no means exclusively, for motor cars.

The conventional wiring circuit of an engine-driven road vehicle employs a battery feeding a central fuse box, for example under the dashboard or on a bulkhead, from which wires pass to control switches on the dash and thence to the individual current-consuming items such as lamps, wiper motors, window controls and so on. The wiring throughout has to be of adequate cross-section to carry the current consumed by the item in question, although it is known, and indeed usual, to use relays to feed certain heavy-current items such as the electric starter motor and also, sometimes, the horn. In a saloon motor car of the present day, and especially one of high quality, a very great amount of cable of relatively heavy gauge is required, and both its weight and its physical bulk are substantial. Still further wiring is required if a high level of safety is expected, for example by employing relays to ensure that certain vital items are still supplied on blowing of a fuse.

In recent years a substantial amount of work has been done on various forms of indirect control, employing a ring main system carrying current around the vehicle, in conjunction with a sophisticated electronic system that controls the switching on and off of the individual items locally by the use of a multiplexed signal, either time division or frequency division multiplex. A decoder associated with each item responds only to the signal destined for that item; the signals may be sent through the ring main itself or through a

separate signalling cable running around all the items to be controlled. Such a system requires relatively sophisticated 'black boxes' and is subject to certain serious defects that have so far prevented its adoption in practice. The most serious defect is that it is prone to faulty operation, i.e. an instruction intended for one item is wrongly decoded and causes operation of a totally different item, with possible dangerous consequences, and this can arise not only through faults within the system but also, even more dangerously, from external spurious signals picked up by the signalling circuit, which is necessarily of high impedance.

A further defect is the difficulty of tracing and dealing with faults. It is true that such a system can incorporate its own fault-tracing and diagnosing circuits, but diagnosis does not in itself cure the fault. Thus a breakdown away from a competent servicing station can lead to the vehicle being totally immobilised, and even when the fault is dealt with it will generally be by the wholesale replacement of relatively expensive 'black boxes', without any attempt at repair.

For the reasons stated above, such sophisticated signalling systems, although developed and offered by the equipment manufacturers, have not, as far as we are aware, yet been adopted on any production vehicle.

The aim of the present invention is to put forward a system which reduces substantially the weight and bulk of the wiring required by conventional systems, yet retains their simplicity and ease of servicing, as well as their reliability. Certain other advantages also follow, as will become clear below.

According to the invention we propose that there should be a common heavy-current ring main connected to a supply source and extending around at least a part of the structure of the vehicle in a path which passes close to each of the said components, a relay (as herein defined) disposed locally near each component with its heavy-current path lying in a path from an adjacent point on the ring-main through the associated component, and a separate light-current lead connected from the light-current path of each relay to the remote control point for the associated component to control the current through that light-current path.

The word 'component' in this context is intended to include not only a single current-consuming item, but in some cases a group of two or more such items; for example where there are twin reversing lamps, the pair of them may be treated as a single component.

The principle according to the invention may be applied to some only or to all the electrical components on the vehicle. The ring main can, generally speaking, follow a path around the periphery of the vehicle and is preferably a closed loop. It may have some branches, and could be in the form of a grid, i.e. a loop with one or more cross-ties. At all events, this simple heavy-current conductor carries all the operating currents of its associated components, and the light-current control leads can be of as small a gauge as is consistent with adequate mechanical strength. The overall weight of copper is substantially less than in a conventional system, and the light operating leads can be assembled together in harnesses, as in known systems, but with much less bulk. Tests indicate that there can be a saving of as much as 30 - 40% of the weight of copper in a conventional system.

The 'control points' referred to above will generally be manually operated switches, but they could themselves be the contacts, i.e. the 'heavy-current paths' of further relays. The switches can be of much lighter construction than those in a conventional vehicle wiring system as they are only carrying light currents, and the heat-disspation problem in the dashboard region, which can occur in some known systems, is eliminated. Moreover there is now greater freedom in the placing of the switches, since there is no additional economy in wiring achieved (as there is in known systems) by grouping switches together.

A further advantage is that the need for a conventional central fuse box is eliminated and so the light-current control leads, quite apart from being lighter, are also substantially shorter than conventional leads. Generally speaking, the lead only needs to go from the relay to the control point (which may be nowhere near the dashboard, for example in the case of window winder controls) and thence direct to earth. This in contrast to the conventional systems in which a lead (and a heavy current one at that) would have to go from the control point back to the fuse box, typically under the dashboard or on a bulkhead in the engine compartment.

There may be local fuses between each item and the ring main, located as close as possible to the ring main. Location of the fuses adjacent to the items they protect considerably simplifies the identification and remedying of faults.

The relays are preferably conventional electromagnetic relays of a well-established and proven kind. However the term 'relay' is used in the attached claims to mean (and is hereby so defined) any appropriate device having a light-current path through which a current can be passed to control the flow of current through a second path, which is capable is carrying a heavier current and which we call the heavy-current path. For example it would be possible, within the scope of the invention, to employ the known electronic equivalents of electromagnet relays, for example transistors or silicon controlled rectifiers.

The winding or light-current path of each relay is, according to an important further feature of the invention, preferably fed direct from the ring main, so that the light-current lead from the winding to the control point (such as a switch on the dashboard or elsewhere) is in the return side, and the other side of the switch can be connected directly to earth by way of the chassis. No fuse protection in the light-current control lead is necessary since a fault between it and the chassis will produce no heavy currents that could cause fires, and at worst it will only cause inadvertent operation of the associated item. Additionally, by making the length of the light lead between the relay winding and the ring main very short, the risk of a short circuit is reduced and in the unlikely event of such a short circuit, the light lead would itself act as a fuse.

The ring main itself may be protected by a single master fuse or, better still, a thermal cut-out.

An example of a typical layout in accordance with the invention will now be described in outline with reference to the accompanying drawings, in which:-

Figure 1 illustrates diagrammatically a plan view of a passenger saloon motor car;

0039580

Figure 2 shows part of the circuit in more detail; and

Figures 3 and 4 show a comparison between the wiring of a typical item by the conventional method (Figure 3) and the method according to the invention (Figure 4).

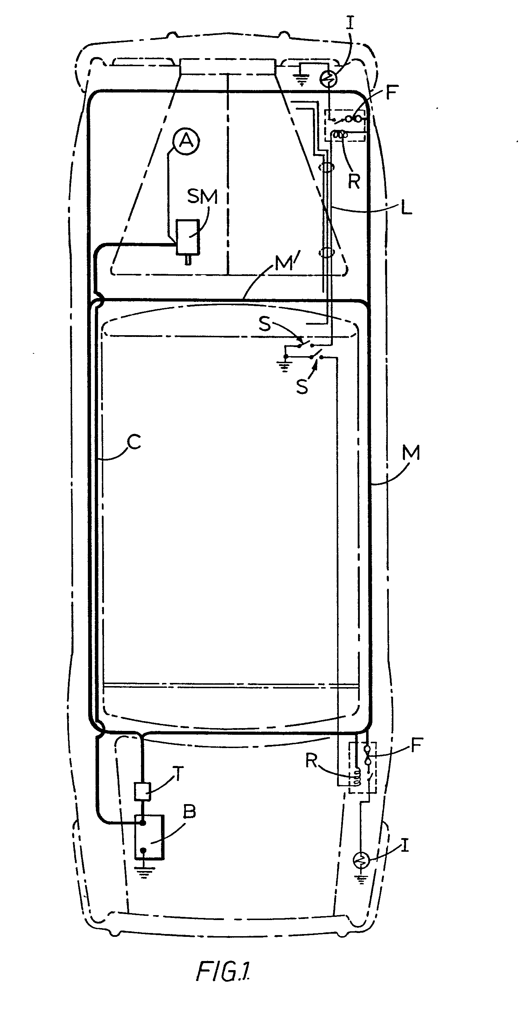

Referring first to Figure 1, a rear-mounted battery B is connected through a thermal cut-out T (set, for example, to open at 70 amps) and possibly a master switch (not shown) to a heavy-gauge ring main M in the form of a closed loop extending substantially around the car at a convenient level, for example across the front of the boot, along the side sills, and around the upper part of the engine compartment; there is also a cross-tie M' across the scuttle. The starter motor SM is fed in a conventional manner through a separate heavy gauge cable C, independently of the ring, and in order to guard against the effects of an open circuit between the alternator (shown at A) and the battery due to a possible opening of the thermal cut-out T, the alternator is not connected through the ring main but to the separate starter motor cable C.

The ring main M is of 120/0.3mm insulated copper cable and produces negligible voltage drop, even with a substantial proportion of the electrical current-consuming items in operation simultaneously. A typical item, lamp I, has one side connected through a very short lead to the nearest point on the ring M through a fuse F and contacts of a relay R, the other side of the item being connected to chassis, again through a very short lead. This relay has its winding connected at one side directly to the ring and its other side through a light-current control lead L to a controlling switch S on the dashboard, the other side of this switch being connected to chassis. The lead L can be of light gauge (typically 16/0.2mm) and furthermore the switch itself can be of lighter construction than is conventional. The lead L can be incorporated in a harness along with similar leads to other items but the harness will be much lighter and slimmer than a conventional harness feeding the same number of items.

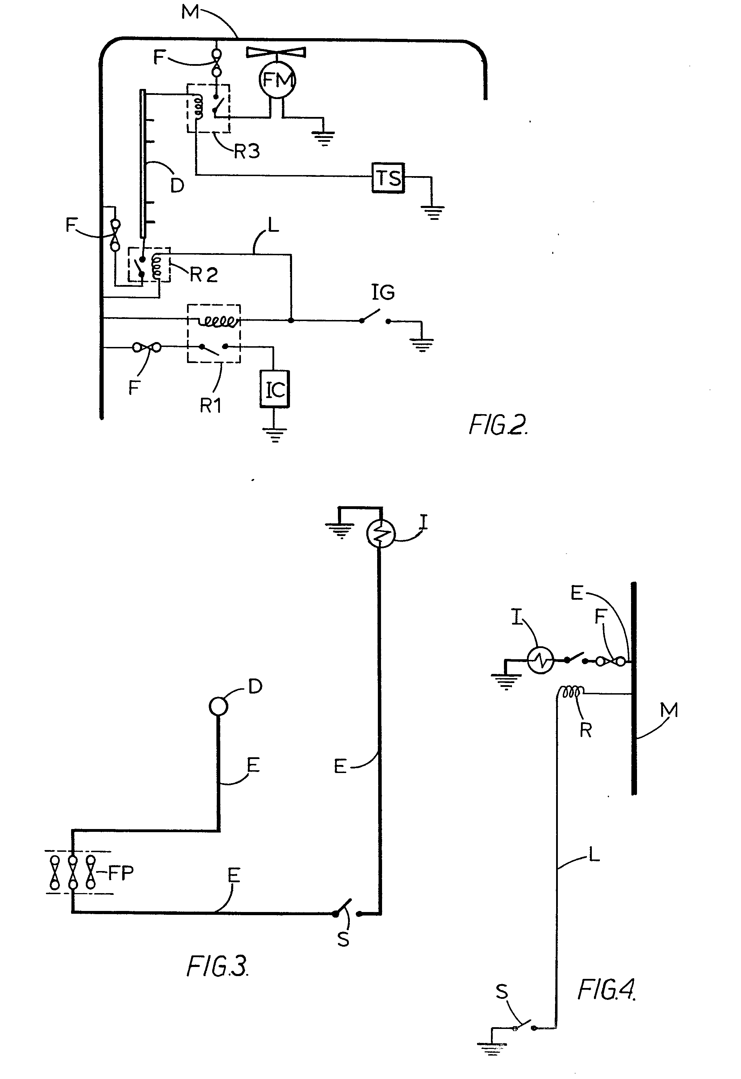

It will be understood that many of the items may be controlled indirectly, for example only when the ignition switch is on. Figure 2 illustrates by way of example the connections to such an item, namely a thermostatically controlled electrically driven fan for the radiator. An ignition switch IG on the dashboard, as well as controlling a relay R1 which has contacts energising the ignition coil IC, also controls, through a light-current lead L, a relay R2 of which the contacts close to connect a rail or busbar D to the ring main M through a fuse F. All the items which are only to be energised when the ignition switch is on are connected to this rail (or to other similarly connected but separately fused rails). A relay R3 has its winding connected between this rail and one side of a thermostatic sensor switch TS exposed to engine coolant temparature, the other side of this switch being earthed. When this switch closes then (if the ignition switch is on) the relay R3 is energised to close its contacts and connect an electric motor FM, driving the fan, to the ring main M through a fuse F. The lead between the unitary of the relay $R_3$ and the switch TS is, of course, only of light gauge.

There may well also be further relays for safety purposes, i.e. to ensure that failure of a headlamp, or of all headlamps, switches on alternative lamps; these are known in existing high-quality vehicles. This feature can be combined with the relays described above, and in practice it is found that a typical layout requires a total of between thirty-five and forty relays, which number is similar to that in a conventional system having the stated safety features.

The relays and fuses may be combined in groups, mounted in boxes at conveniently accessible points. For example those for the headlamps and sidelamps, the lamp washing and wiping systems and the electric cooling fan may be mounted on the top surface of the front end of each front wheel arch. Standard forms of box may be used at each point, and they can be based on printed circuits. It will be appreciated that this placing makes the location of faults and replacement of fuses particularly simple, and furthermore, since no sophisticated technology is involved, servicing and repair can readily be carried out by personnel who are conversant with conventional systems.

In a typical example, the vehicle may be equipped with eight-way boxes (that is to say, each containing eight fuses and eight relays) of a uniform design placed at each of a number of strategic points where there is a concentration of components near the ring main.

The connections from the ring main to each item are preferably made without breaking the ring, for example by a clamping method that ensures good contact between the branch lead and an exposed area of the surface of the ring conductor.

Figures 3 and 4 emphasise the saving in length, as well as gauge, that can be obtained in the case of many items. In the known arrangement shown in Figure 3, a cable E sufficiently heavy to carry the full operating current of the item I passes from a central distribution point D to a switch S on the dashboard via a common fuse panel FP. From the switch S a cable of the same gauge passes to the item. In the system of Figure 4 a cable E of negligible length connects the ring main M to the fuse F and thence to the relay contacts and on via the item I to earth, and the only other connection is the light-gauge lead L running via the relay R to the switch S on the dash and so to earth.

The invention has been described by way of example with reference to a single-pole system, i.e. in which all the return paths are to the chassis, as is standard practice in passenger road vehicles. However, within the scope of the invention it would be possible to provide for both the supply and return paths to be separate from the chassis. There could be a second ring main alongside the first and connected to the negative side of the battery. Although it would double the weight of copper compared with the system described, there would still be a comparable saving achieved by this two-wire system over a conventional two-wire system. Within the invention one could envisage a hybrid system in which there is a ring main return for the heavy currents, but the light control currents are returned to the chassis.

## CLAIMS

1. An electrical system in a motor road vehicle having several spaced-apart current-consuming electrical components (I), the current to each of which is to be controlled from a respective control point (S) remote from the component, the system comprising a common heavy current ring main (M) connected to a supply source (B) and extending around at least a part of the structure of the vehicle in a path which passes close to each of the said components (I), a relay (R) (as herein defined) disposed locally near each component with its heavy-current path lying in a path from an adjacent point on the ring main (M) through the associated component (I), and a separate light-current lead (L) connected from the light-current path of each relay (R) to the remote control point (S) for the associated component to control the current through that light-current path.

2. An electrical system according to Claim 1 in which at least the greater part of the ring main (M) forms a closed loop.

3. An electrical system according to Claim 1 or Claim 2 in which the return current path for each component is completed through the structure of the vehicle and in which the heavy-current path of each relay (R) is connected between the ring main (M) and the associated component (I).

4. An electrical system according to Claim 3 in which there is a local fusible link (F) in the current path between each of at least the majority of the components (I) and the adjacent point on the ring main (M).

5. An electrical system according to any one of Claims 1 to 4 in which the operating current for each relay is provided by a connection from the light-current path of the relay (R) to an adjacent point on the ring main (M).

6. An electrical system according to Claim 5 in which a return path from the operating current for each relay (R) is provided by a connection from the associated control point (S) to the structure of the vehicle.

7. An electrical system according to Claim 5 or Claim 6 in which there is no fusible link in the said connection from the light-current path of the relay (R) to the adjacent point in the ring main (M).

8. An electrical system according to any one of Claims 1 to 7 in which there is a thermal cut-out (T) between the supply source (B) and the ring main (M).

9. An electrical system according to any one of Claims 1 to 8 in which the connections from the components (I) to the ring main (M) are made by a clamping method without breaking the ring main.

0039580

FIG.1

FIG.2.

FIG.3.

FIG.4.

European Patent Office

**EUROPEAN SEARCH REPORT**

0039580

Application number

EP 81 30 1904

## DOCUMENTS CONSIDERED TO BE RELEVANT

| Category | Citation of document with indication, where appropriate, of relevant passages | Relevant to claim |
|---|---|---|
| X | US - A - 3 952 209 (INTERNATIONAL TELEPHONE AND TELEGRAPH)<br>* Column 2, line 50 to column 3, line 17; figure 1 * | 1-3,5, 6,7 |
| X | GB - A - 1 287 074 (FORD MOTOR)<br>* Page 2, line 80 to page 3, line 53; figures 1-5 * | 1-3,5, 6,7,9 |
| | FR - A - 2 085 980 (JAGUAR CARS)<br>* Page 2, line 23 to page 5, line 9; figure 1 *<br>& GB - A - 1 282 657 | 1-3,5, 6,7 |
| | FR - A - 1 524 786 (A.G. ESPINOSA)<br>* Page 2, left-hand column, line 44 to right-hand column, line 9; figures 1,2 * | 4 |
| A | US - A - 3 648 057 (ESSEX-INTERNATIONAL)<br>* Column 1, line 61 to column 2, line 34; figure 1 * | 1 |

**CLASSIFICATION OF THE APPLICATION (Int. Cl.³)**

B 60 Q    1/00
B 60 L    1/00

**TECHNICAL FIELDS SEARCHED (Int. Cl.³)**

B 60 Q    1/00
B 60 L    1/00
B 60 R   16/00
           16/02
           16/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 06-08-1981 | WEIHS |

EPO Form 1503.1   06.78